# EUROPÄISCHE PATENTANMELDUNG

(11) **EP 3 090 901 A1**
(43) Veröffentlichungstag der Anmeldung: **09.11.2016**
(21) Anmeldenummer: 16158564.1
(22) Anmeldetag: 03.03.2016
(51) Int. Cl.: B60R 5/04

(54) **SCHUTZVORRICHTUNG FÜR EINEN FAHRZEUGINNENRAUM**

(30) Priorität: 08.05.2015 DE 102015208627
(71) Anmelder: BOS GmbH & Co. KG, 73760 Ostfildern (DE)
(72) Erfinder: Walter, Herbert, 73061 Ebersbach (DE)
(74) Vertreter: Patentanwälte Ruff, Wilhelm, Beier, Dauster & Partner mbB

(57) **Zusammenfassung**

2.1 Eine Schutzvorrichtung für einen Fahrzeuginnenraum mit einem flexiblen Flächengebilde, das auf einer Wickelwelle gehalten und zwischen einer auf die Wickelwelle aufgewickelten Ruheposition und einer ausgezogenen Schutzposition beweglich gelagert ist, und das an einem in Auszugrichtung vorderen Stirnendbereich auf gegenüberliegenden Seiten mit jeweils einem Führungsglied versehen ist, die mit einem Antriebssystem verbindbar sind, das einen Antriebsmotor sowie Antriebsübertragungsmittel umfasst, die mit den Führungsgliedern verbunden sind, um eine synchrone Verlagerung beider Führungsglieder zu bewirken, ist bekannt.

2.2 Erfindungsgemäß weisen die Antriebsübertragungsmittel auf einer Seite einen umlaufenden Zugmitteltrieb auf, der mit dem einen Führungsglied verbunden und durch den Antriebsmotor angetrieben ist, und das gegenüberliegende Führungsglied ist durch einen translatorisch beweglichen Zug-Druck-Strang verlagerbar, der an den umlaufenden Zugmitteltrieb gekoppelt und zu dem Führungsglied geführt ist.

2.3 Einsatz bei Personenkraftwagen

## Beschreibung

Die Erfindung betrifft eine Schutzvorrichtung für einen Fahrzeuginnenraum mit einem flexiblen Flächengebilde, das auf einer Wickelwelle gehalten und zwischen einer auf die Wickelwelle aufgewickelten Ruheposition und wenigstens einer ausgezogenen Schutzposition beweglich gelagert ist, und das an einem in Auszugrichtung vorderen Stirnendbereich auf gegenüberliegenden Seiten mit jeweils einem Führungsglied versehen ist, die mit einem Antriebssystem verbindbar sind, das einen Antriebsmotor sowie Antriebsübertragungsmittel umfasst, die mit den Führungsgliedern verbunden sind, um eine synchrone Verlagerung beider Führungsglieder zu bewirken.

Eine derartige Schutzvorrichtung ist in Form einer Laderaumabdeckung für einen Personenkraftwagen bekannt DE 199 44 948 C1. Eine derartige Laderaumabdeckung weist als flexibles Flächengebilde eine Abdeckplane auf, die auf einer drehbaren Wickelwelle auf- und abwickelbar gehalten ist. Die Wickelwelle ist in einem Kassettengehäuse gelagert, das in montiertem Zustand innerhalb des Laderaumes in Fahrzeugquerrichtung ausgerichtet und hinter einer Fondsitzbank des Fahrzeuginnenraumes positioniert ist. Die Abdeckplane weist an ihrem in Auszugrichtung vorderen Stirnendbereich ein formstabiles Auszugprofil auf, das an seinen gegenüberliegenden Seiten mit jeweils einem Führungszapfen versehen ist, die seitlich nach außen über die Abdeckplane hinausragen. An gegenüberliegenden Seitenwandungen des Laderaumes ist jeweils eine Führungsschiene vorgesehen, in der ein Mitnehmer translatorisch verschiebbar geführt ist. Die Mitnehmer dienen dazu, die Führungszapfen des Auszugprofils aufzunehmen und so die Abdeckplane aus einer Ruhestellung in eine Schutzstellung und wieder zurück zu überführen. Die beiden Mitnehmer sind über Antriebsübertragungsmittel in Form von Zug-Druck-Strängen mit einem Antriebsmotor verbunden, der zentral angeordnet ist und beide Antriebsübertragungsmittel synchron antreibt.

Aufgabe der Erfindung ist es, eine Schutzvorrichtung der eingangs genannten Art zu schaffen, die eine einfache Montage im Kraftfahrzeug ermöglicht und funktionssicher gestaltet ist.

Diese Aufgabe wird dadurch gelöst, dass die Antriebsübertragungsmittel auf einer Seite einen umlaufenden Zugmitteltrieb aufweisen, der mit dem einen Führungsglied verbunden und durch den Antriebsmotor angetrieben ist, und dass das gegenüberliegende Führungsglied durch einen translatorisch beweglichen Zug-Druck-Strang verlagerbar ist, der an den umlaufenden Zugmitteltrieb gekoppelt und zu dem Führungsglied geführt ist. Die erfindungsgemäße Schutzvorrichtung eignet sich zur Beschattung von Seiten- und Heckscheiben sowie von Glasdachbereichen wie auch als etwa horizontal ausziehbarer Abdeckschutz oder als etwa vertikal ausziehbarer Abtrennschutz für einen Laderaum eines Personenkraftwagens, der innerhalb des Fahrzeuginnenraumes zu einem Fahrgastraum hin offen ist. Als Zugmitteltrieb ist vorzugsweise ein Seiltrieb oder ein Riementrieb vorgesehen. Ein Riementrieb umfasst kraft- oder formschlüssig wirksame Riemen wie Keil- oder Zahnriemen. Der umlaufende Zugmitteltrieb zeichnet sich dadurch aus, dass das entsprechende Zugmittel, das heißt insbesondere das Seil oder der Riemen, geschlossen über zwei zueinander beabstandete Umlenkrollen umläuft, wodurch sich zwei gegenläufige Zugmitteltrums ergeben. Dabei kann ein Seil oder ein Riemen auch offen gestaltet sein und mit seinen gegenüberliegenden Enden an einer oder an beiden Umlenkrollen befestigt sein. Dabei muss das Seil oder der Riemen jedoch so zwischen den Umlenkrollen verlegt sein, dass sich die beiden gegenläufigen Trums ergeben. Durch die erfindungsgemäße Lösung kann der Zugmitteltrieb gemeinsam mit dem Antriebsmotor seitlich innerhalb des Fahrzeuginnenraumes angeordnet und insbesondere als Vormontageeinheit gemeinsam mit entsprechenden, fahrzeugseitig zu montierenden Führungsschienen der Schutzvorrichtung angeliefert werden. Der Zug-Druck-Strang kann bei einer Montage im Kraftfahrzeug in einfacher Weise innerhalb des Kraftfahrzeugs verlegt und zur gegenüberliegenden Seite der Schutzvorrichtung geführt werden.

In Ausgestaltung der Erfindung ist der Zug-Druck-Strang an einem Endbereich mit dem Führungsglied und an einem gegenüberliegenden Endbereich mit einem Trum des umlaufenden Zugmitteltriebs verbunden. Durch entsprechende Umlenkung des Zug-Druck-Stranges erfolgt trotz gegenläufiger Bewegung der beiden Trums des Zugmitteltriebs eine synchrone Parallelverlagerung der beiden Führungsglieder des Stirnendbereichs des flexiblen Flächengebildes, und zwar je nach Drehrichtung des geschlossenen, umlaufenden Zugmitteltriebs in Richtung der Ruheposition oder in Richtung der Schutzposition des Flächengebildes.

In weiterer Ausgestaltung der Erfindung ist der Zug-Druck-Strang als flexibles Zug-Druck-Profil gestaltet, das in einer ortsfesten, mit wenigstens einer Krümmung versehenen Führungsspur geführt ist. Die Führungsspur ist vorzugsweise als Führungskanal, als Führungsnut oder als Führungsschlauch oder Führungsrohr gestaltet. In betriebsfertig montiertem Zustand ist die Führungsspur innerhalb des Fahrzeuginnenraumes ortsfest angeordnet. Der Zug-Druck-Strang gleitet innerhalb der Führungsspur. Innerhalb der Führungsspur kann der Zug-Druck-Strang translatorisch in beiden Richtungen verschoben werden.

In weiterer Ausgestaltung der Erfindung ist das eine Führungsglied des Stirnendbereichs des flexiblen Flächengebildes mit einem ersten Trum des umlaufenden Zugmitteltriebs verbunden, und das gegenüberliegende Führungsglied des Stirnendbereichs des flexiblen Flächengebildes ist über den Zug-Druck-Strang mit einem zweiten, gegenläufig zum ersten Trum beweglichen Trum verbunden. Über die Umlenkung mittels des Zug-Druck-Stranges ist eine synchrone und parallele Verlagerung beider Führungsglieder des Flächengebildes gewährleistet.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch in perspektivischer Darstellung eine Ausführungsform einer erfindungsgemäßen Schutzvorrichtung in Form einer Laderaumabdeckung für einen Personenkraftwagen und
- Fig. 2: in schematischer Draufsicht die Schutzvorrichtung nach Fig. 1.

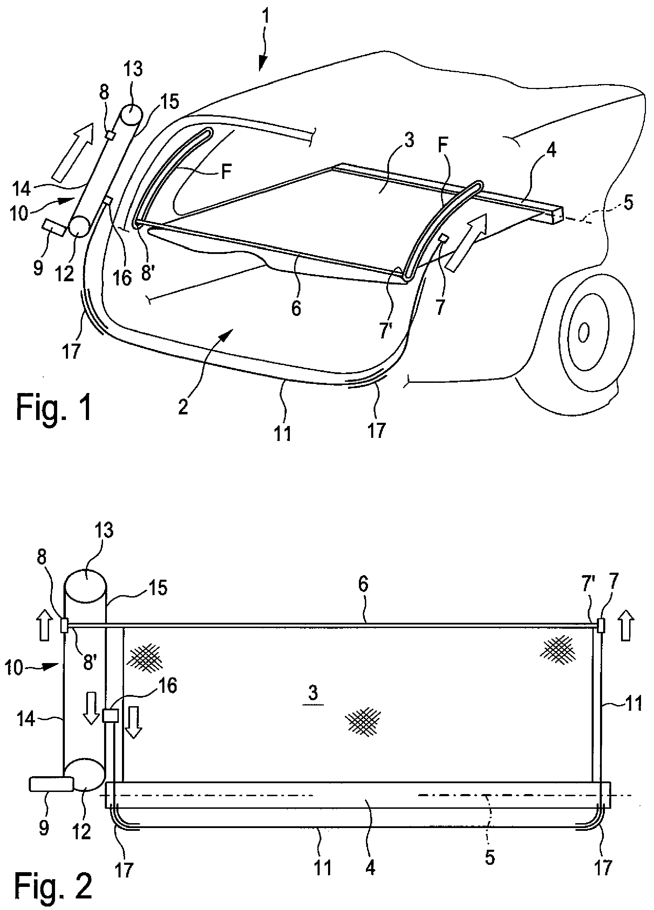

Ein Personenkraftwagen 1 nach Fig. 1 ist als Kombi-Personenkraftwagen gestaltet, dessen Laderaum 2 innerhalb eines Fahrzeuginnenraumes hinter einem Fahrgastraum angeordnet ist. Der Laderaum 2 wird nach vorne in nicht näher dargestellter Weise durch eine Rückenlehnenanordnung einer Fondsitzbank begrenzt. Nach hinten wird der Laderaum 2 durch eine nicht dargestellte Heckklappe des Personenkraftwagens 1 begrenzt.

Zur etwa horizontalen Abdeckung des Laderaumes 2 auf Höhe einer Fahrzeugbrüstung ist eine Schutzvorrichtung in Form einer Laderaumabdeckung vorgesehen, die ein flexibles Flächengebilde 3 aufweist. Das flexible Flächengebilde 3 ist als Abdeckplane gestaltet und auf einer lediglich durch eine strichpunktierte Linie dargestellten Wickelwelle 5 auf- und abwickelbar gehalten. Die Wickelwelle 5 ist in einem Kassettengehäuse 4 drehbar gelagert, das in nicht näher dargestellten fahrzeugseitigen Halterungen in Fahrzeugquerrichtung in dem Laderaum unmittelbar hinter der Rückenlehnenanordnung befestigt ist. Das flexible Flächengebilde 3 ist zwischen einer auf die Wickelwelle 5 aufgewickelten und in dem Kassettengehäuse 4 abgelegten Ruheposition und einer zu dem Fahrzeugheck nach hinten ausgezogenen Schutzposition verlagerbar. Hierzu weist das flexible Flächengebilde 3 an seinem in Auszugrichtung vorderen Stirnendbereich ein formstabiles Auszugprofil 6 auf, das an seinen gegenüberliegenden Stirnseiten 7', 8' mit jeweils einem Führungsglied 7, 8 verbindbar ist, wobei die Führungsglieder 7, 8 als Mitnehmer für die gegenüberliegenden Stirnseiten 7', 8' des Auszugprofiles 6 gestaltet sind. Die Führungsglieder 7, 8 sind in fahrzeugseitig befestigten Führungsschienen F translatorisch verlagerbar. Die Führungsschienen F erstrecken sich beim dargestellten Ausführungsbeispiel entlang von heckseitigen Karosseriesäulen des Personenkraftwagens ausgehend von der Höhe der Fahrzeugbrüstung aus schräg nach oben und in Fahrzeuglängsrichtung nach vorne. Die Führungsschienen F sind fahrzeugfest mit einer entsprechenden Karosserietragstruktur des Personenkraftwagens verbunden und vorzugsweise in entsprechenden Karosseriesäulenverkleidungen des Fahrzeuginnenraumes integriert. Das Auszugprofil 6 ist entlang dieser Führungsschienen F zwischen der in Fig. 1 dargestellten horizontalen Schutzstellung und einer schräg nach oben und nach vorne verlagerten Schutzstellung beweglich, um bei einem Öffnen der Heckklappe einen guten Zugang zu dem Boden des Laderaumes 2 zu ermöglichen. Bei einem erneuten Schließen der Heckklappe bewegt sich das Auszugprofil 6 wieder in seine untere Stellung gemäß Fig. 1 zurück.

Zur Bewegung des Auszugprofils 6 zwischen diesen beiden unterschiedlichen Stellungen in den Führungsschienen F ist ein Antriebssystem vorgesehen, das einen Antriebsmotor 9 in Form eines Elektromotors sowie Antriebsübertragungsmittel umfasst, die durch einen geschlossen umlaufenden Zugmitteltrieb 10 einerseits und einen translatorisch beweglichen Zug-Druck-Strang andererseits gebildet sind. Der Zug-Druck-Strang 11 ist in einer Führungsspur 17 translatorisch verschiebbar geführt, die als Führungsrohr gestaltet ist. Die Führungsspur 17 ist fahrzeugfest verlegt. Der Zugmitteltrieb 10 wird durch einen geschlossen umlaufenden Seilzug gebildet. Der Seilzug weist eine erste Umlenkrolle 12 sowie eine zweite Umlenkrolle 13 auf, die zueinander beabstandet sind. Der geschlossen umlaufende Seilzug weist ein erstes Seiltrum 14 sowie ein gegenüberliegendes zweites Seiltrum 15 auf. Der Zugmitteltrieb 10 einschließlich des Antriebsmotors 9 sind - in normaler Fahrtrichtung des Personenkraftwagens 1 gesehen - im Bereich der linken Führungsschiene F an der Karosserietragstruktur längs der linken heckseitigen Karosseriesäule befestigt. Der Antriebsmotor 9 wirkt auf die Umlenkrolle 12 und treibt so den Zugmitteltrieb 10 in beiden Drehrichtungen an. An dem ersten Seiltrum 14 ist ein erstes Führungsglied 8 befestigt, wohingegen an dem zweiten Seiltrum 15 ein Führungselement 16 befestigt ist. Aufgrund der gegenläufigen Bewegungen der beiden Seiltrums 14, 15 bewegen sich zwangsläufig auch die mit den Seiltrums 14, 15 fest verbundenen Elemente 8 und 16, das heißt das Führungsglied 8 und das Führungselement 16, gegenläufig zueinander. Das Führungselement 16 ist mit einem Endbereich des Zug-Druck-Stranges 11 verbunden, dessen gegenüberliegender Endbereich mit dem Führungsglied 7 verbunden ist, das in der gegenüberliegenden Führungsschiene F translatorisch verschiebbar geführt ist. Der Zug-Druck-Strang 11 ist über die Führungsspur 17 von der einen Seite des Laderaumes 2 zur gegenüberliegenden Seite des Laderaumes 2 hin geführt, wodurch der Zug-Druck-Strang 11 zwischen seinem einen Endbereich und dem anderen Endbereich um zweimal 90 ° und demzufolge um 180 °C umgelenkt ist.

Sobald die gegenüberliegenden Stirnseiten 7', 8' in den entsprechenden Führungsgliedern 7, 8 in den gegenüberliegenden Führungsschienen F befestigt sind, führt eine Aktivierung des Antriebsmotors 9 zwangsläufig zu einer Drehbewegung des geschlossenen, umlaufenden Zugmitteltriebs 10, wodurch das Führungsglied 8 und das Führungselement 16 gemäß den Pfeilrichtungen in Fig. 2 gegensinnig zueinander bewegt werden. Die Bewegung des Führungselementes 16 wird über den Zug-Druck-Strang 11 zur gegenüberliegenden Seite des Flächengebildes 3 übertragen, wo der Endbereich des Zug-Druck-Stranges 11 mit dem Führungsglied 7 verbunden ist, das die Stirnseite 7' des Auszugprofils 6 führt. Anhand der dem Zug-Druck-Strang 11 zugeordneten Pfeile in Fig. 2 ist erkennbar, dass die gegenüberliegenden Stirnseiten 7', 8' des Auszugprofils 6 bei einer Aktivierung des Antriebsmotors 9 in gleichen Richtungen bewegt werden. Die Verlagerung des Auszugprofils 6 erfolgt demzufolge weitgehend parallel zu einer Drehachse der Wickelwelle 5, so dass das Flächengebilde 3 zumindest weitgehend parallel ausgezogen oder in das Kassettengehäuse 4 eingezogen wird.

Der Zugmitteltrieb 10 bildet somit die aktive Antriebskomponente für eine Verlagerung des Flächengebildes 3, wohingegen der Zug-Druck-Strang 11 und damit die gegenüberliegende Seite des Auszugsprofils 6 passiv mitgeführt werden.

Das Antriebssystem gemäß Fig. 2 kann alternativ zu der Ausführung gemäß 1 auch dazu vorgesehen sein, um das Flächengebilde 3 aus seiner vollständig auf die Wickelwelle 5 aufgewickelten Ruheposition bis in seine vollständig ausgezogene Schutzposition zu überführen. Hierzu sind der Zugmitteltrieb 10 und der Zug-Druck-Strang 11 entsprechend geradlinig verlaufender Führungsschienen über die gesamte Auszuglänge des Flächengebildes 3 dimensioniert und erstreckt. Die Führungsschienen, die analog der Führungsschienen F, jedoch in geradliniger Ausführung, gestaltet sein können, sind in Fig. 2 aus Übersichtlichkeitsgründen weggelassen. Im Übrigen entspricht diese Ausführungsform der zuvor anhand der Fig. 1 und 2 beschriebenen Ausführungsform.

## Patentansprüche

1. Schutzvorrichtung für einen Fahrzeuginnenraum mit einem flexiblen Flächengebilde (3), das auf einer Wickelwelle (5) gehalten und zwischen einer auf die Wickelwelle (5) aufgewickelten Ruheposition und wenigstens einer ausgezogenen Schutzposition beweglich gelagert ist, und das an einem in Auszugrichtung vorderen Stirnendbereich auf gegenüberliegenden Seiten mit jeweils einem Führungsglied (7, 8; 7', 8') versehen ist, die mit einem Antriebssystem verbindbar sind, das einen Antriebsmotor (9) sowie Antriebsübertragungsmittel umfasst, die mit den Führungsgliedern (7, 8) verbunden sind, um eine synchrone Verlagerung beider Führungsglieder (7, 8) zu bewirken, **dadurch gekennzeichnet, dass** die Antriebsübertragungsmittel auf einer Seite einen umlaufenden Zugmitteltrieb (10) aufweisen, der mit dem einen Führungsglied (8) verbunden und durch den Antriebsmotor (9) angetrieben ist, und dass das gegenüberliegende Führungsglied (7) durch einen translatorisch beweglichen Zug-Druck-Strang (11) verlagerbar ist, der an den umlaufenden Zugmitteltrieb (10) gekoppelt und zu dem Führungsglied (7) geführt ist.

2. Schutzvorrichtung nach Anspruch 1, **dadurch gekennzeichnet, dass** der Zug-Druck-Strang (11) an einem Endbereich mit dem Führungsglied (7) und an einem gegenüberliegenden Endbereich mit einem zweiten Trum (15) des umlaufenden Zugmitteltriebs (10) verbunden ist.

3. Schutzvorrichtung nach Anspruch 1 oder 2, **dadurch gekennzeichnet, dass** der Zug-Druck-Strang (11) als flexibles Zug-Druck-Profil gestaltet ist, das in einer ortsfesten, mit wenigstens einer Krümmung versehenen Führungsspur (17) geführt ist.

4. Schutzvorrichtung nach einem der vorhergehenden Ansprüche, **dadurch gekennzeichnet, dass** das eine Führungsglied (8) des Stirnendbereichs des flexiblen Flächengebildes (3) mit einem ersten Trum (14) des umlaufenden Zugmitteltriebs (10) verbunden ist, und dass das gegenüberliegende Führungsglied (7) des Stirnendbereichs des flexiblen Flächengebildes (3) über den Zug-Druck-Strang mit einem zweiten, gegenläufig zum ersten Trum (14) beweglichen Trum (15) verbunden ist.
